# EUROPÄISCHE PATENTSCHRIFT

(11) **EP 0 643 650 B1**
(45) Veröffentlichungstag und Bekanntmachung des Hinweises auf die Patenterteilung: **17.04.1996**
(21) Anmeldenummer: 93912557.1
(22) Anmeldetag: 03.06.1993
(51) Int. Cl.: B60T 8/26, B60T 8/94, B60T 8/48, B60T 8/40

(54) **BREMSBLOCKIERSCHUTZEINRICHTUNG**
ANTILOCK SYSTEM
SYSTEME ANTIBLOCAGE

(30) Priorität: 06.06.1992 DE 4218820; 26.02.1993 DE 4305978
(43) Veröffentlichungstag der Anmeldung: 22.03.1995
(73) Patentinhaber: ROBERT BOSCH GMBH, D-70442 Stuttgart (DE)
(72) Erfinder: WILLMANN, Karl-Heinz, D-7149 Freiberg (DE); HOLZMANN, Roland, D-7141 Moeglingen (DE)
(86) Internationale Anmeldenummer: DE9300479
(87) Internationale Veröffentlichungsnummer: WO9325417

(56) Entgegenhaltungen:
- EP-A- 0 487 888
- WO-A-89/08573
- WO-A-90/08682
- DE-A- 3 136 616
- DE-A- 3 631 442
- GB-A- 2 191 835
- GB-A- 2 249 148

## Beschreibung

Die Erfindung geht aus von einer Bremsblockierschutzeinrichtung nach der Gattung des Hauptanspruchs.

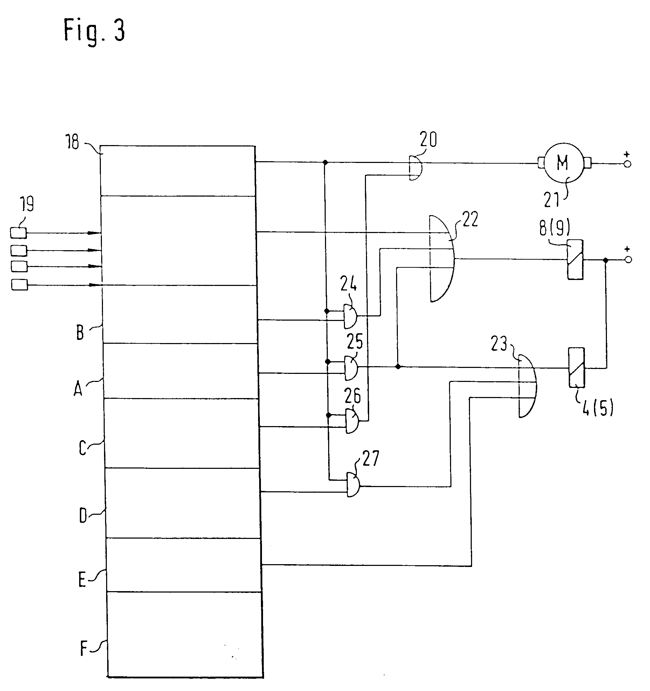

Bei einer durch die Figur 3 der DE-A-31 36 616 bekannten Bremsblockierschutzeinrichtung kann der Bremsdruck an der Hinterachse nicht erhöht werden, ohne daß gleichzeitig der Bremsdruck an der Vorderachse ansteigt, weil im normalen Bremsbetrieb der Hinterachsbremsdruck mittels einer besonderen Druckregeleinrichtung unterhalb des jeweiligen Vorderachsbremsdrucks gehalten wird. Dies bewirkt den Nachteil, daß die Hinterachse im Blockierschutzbetrieb in vielen Fallen unterbremst ist. Die Folge sind gegebenenfalls nachteilig lange Bremswege.

Bei einer durch die DE-A-36 41 442 gemäß deren Figur 3 bekannten Bremsanlage geht von einem Hauptbremszylinder für jeden Bremskreis eine gemeinsame Bremsleitung für Radbremszylinder von jeweils zwei Radbremsen aus, und in diese gemeinsame Bremsleitung ist eine elektromagnetisch steuerbare Wegeventilanordnung einer Bremsblockierschutzeinrichtung eingesetzt. Dabei ist die Wegeventilanordnung als ein sehr teures Mehrwegeventil für drei Stellungen ausgebildet, wobei in der ersten Stellung ein Durchlaß vom Hauptbremszylinder zu zwei dem Mehrwegeventil nachgeordneten Bremskanälen der beiden Radbremsen und gleichzeitig von einem Ausgang einer Rückförderpumpe sowohl zu den Bremskanälen als auch dem Hauptbremszylinder besteht, in einer zweiten Stellung der Ausgang der Rückförderpumpe mit den beiden Bremskanälen/und durch ein Rückschlagventil hindurch mit dem Hauptbremszylinder verbunden ist und in einer dritten Stellung der Ausgang der Rückförderpumpe lediglich mit dem Hauptbremszylinder verbunden ist, wobei zwischen dem Hauptbremszylinder und den beiden Bremskanälen keine Verbindung besteht. Zusätzlich zum teuren Aufwand für dieses Mehrwegeventil ist zum Umschalten in die unterschiedlichen Stellungen eine Stromquelle zu verwenden, die zwei unterschiedliche Ströme zu liefern vermag und deshalb nachteilig teuer ist. Eine zwischen dem Mehrwegeventil und der zugeordneten Hinterradbremse eingesetzte Druckregeleinrichtung ist derart ausgebildet, daß sie im normalen Bremsbetrieb, wenn also keine Radblockiergefahr besteht, lediglich so lange durchströmbar ist, bis ein bestimmter Hinterradbremsdruck, der immer unterhalb dem jeweils herrschenden Vorderradbremsdruck liegt, erreicht ist. Von der Hinterradbremse verläuft eine Leitung zur Saugseite der Rückförderpumpe und demgemäß erfolgen mittels des Mehrwegeventils steuerbare Bremsdruckabsenkungen in der Vorderradbremse indirekt durch die Druckregeleinrichtung bei gleichzeitigem Absenken des Hinterradbremsdruckes.

Durch die WO-A-90/08682 ist eine in eine Bremsanlage eingebaute Bremsblockierschutzeinrichtung mit einer für eine Vorderradbremse und eine Hinterradbremse gemeinsam in eine gemeinsame Bremsleitung eingesetzte Mehrwegeventilanordnung mit drei Stellungen zum Bremsdruckerhöhen bzw. Bremsdruckwiederherstellen, zum Bremsdruckhalten und zum Bremsdruckabsenken bekannt. In der Bremsdruckabsenkstellung befindet sich zwischen der Vorderradbremse und einer Saugseite einer Rückförderpumpe lediglich diese Mehrwegeventilanordnung. Des weiteren ist in dieser Bremsdruckabsenkstellung auch die Hinterradbremse mit der Saugseite der Rückförderpumpe verbunden durch diese Mehrwegeventilanordnung und zusätzlich entweder durch eine elektrisch auf Durchlaß steuerbare Druckregeleinrichtung oder ein zu dieser im Bypaß liegendes Rückschlagventil, wobei beide Elemente zwischen dieser Mehrwegeventilanordnung und der Hinterradbremse angeordnet sind.

Die Funktionen dieses Mehrwegeventils sind nachbaubar mittels zweier 2/2-Wege-Magnetventile, von denen das erste in die gemeinsame Bremsleitung einzusetzen wäre und das zweite einerseits an die Vorderradbremse unmittelbar und andererseits an die Saugseite der Rückförderpumpe anzuschließen wäre. Mittels pulsweise steuerbaren elektromagnetischen Mitteln ist die Regelwirkung der Druckregeleinrichtung umgehbar zum Erhöhen des Hinterradbremsdrucks in einer beispielsweise im wesentlichen idealen Abhängigkeit vom jeweils herrschenden Vorderradbremsdruck.

Durch die EP-A-48 78 88 ist für eine Bremsanlage eine Bremsblockierschutzeinrichtung bekannt, innerhalb der in technisch aufwendiger Weise jede Vorderradbremse und jede Hinterradbremse ihr eigenes für drei Stellungen eingerichtetes Mehrwegeventil besitzt, damit die Bremsdrücke in den Radbremsen der Räder unabhängig voneinander für jedes Rad veränderbar sind zum Vermindern von Radblockiergefahr. Zwischen einem Hauptbremszylinder der Bremsanlage und den Mehrwegeventilen der Hinterradbremsen befindet sich wenigstens eine Druckregeleinrichtung, die in den Hinterradbremsen einen Bremsdruck einregeln kann, der in vorbestimmter Weise unter dem jeweiligen Vorderradbremsdruck liegt. Im Bremsblockierschutzbetrieb ist diese wenigstens eine Druckregeleinrichtung umgehbar mittels eines parallel geschalteten Bypaßventils, das als ein 2/2-Wege-Magnetventil ausgebildet und in der Grundstellung geschlossen ist. Im Bremsblockierschutzbetrieb mittels des jeweils einer Hinterradbremse zugeordneten Mehrwegeventils aus der Hinterradbremse abgelassenes Druckmittel wird einer Saugseite der Rückförderpumpe zugeleitet, deren Druckseite mittelbar mit dem Hauptbremszylinder verbunden ist.

Es stellte sich die Aufgabe, ausgehend von einer Bremsblockierschutzeinrichtung der Figur 3 der DE-A-36 31 442 eine Bremsblockierschutzeinrichtung zu schaffen, die funktionell verbessert ist bei möglichst wenig technischem Aufwand.

### Vorteile der Erfindung

Die erfindungsgemäße Bremsblockierschutzeinrichtung mit den kennzeichnenden Merkmalen des Anspruchs 1 ergibt den Vorteil, daß im Bremsblockierschutzbetrieb ein Hinterradbremsdruck über einen durch die Konstruktion der Druckregeleinrichtung vorbestimmten Druck hinaus erhöhbar ist zur Verbesserung der Bremsleistung der Hinterradbremse. Des weiteren vermeidet die Erfindung hohen technischen Aufwand, der für die Ausbildung eines in die gemeinsame Bremsleitung eingesetzten Wegeventils in Form eines für drei Stellungen ausgebildeten Mehrwegeventils im Stand der Technik nötig ist.

Durch die in den Unteransprüchen aufgeführten Maßnahmen sind vorteilhafte Weiterbildungen und Verbesserungen der im Hauptanspruch angegebenen Bremsblockierschutzeinrichtung möglich.

Eine Erweiterung auf die Funktion Antriebsschlupfbegrenzung ist gemäß den kennzeichnenden Merkmalen eines Unteranspruchs mit einfachen Mitteln erreicht.

### Zeichnung

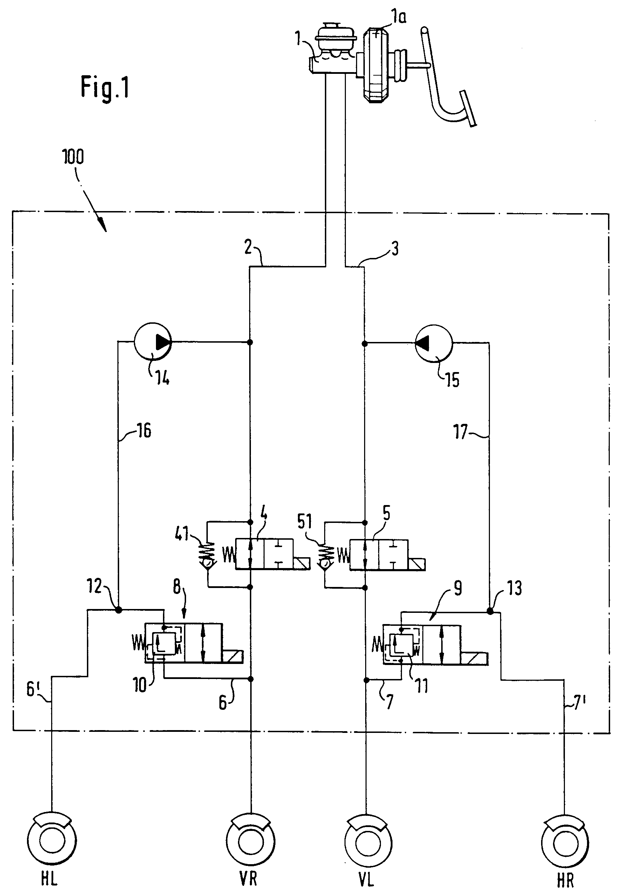

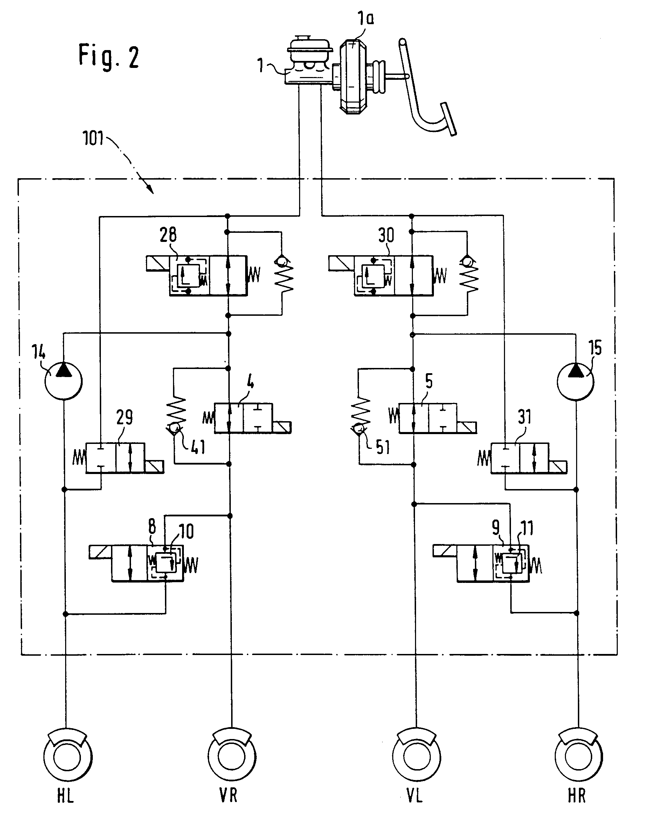

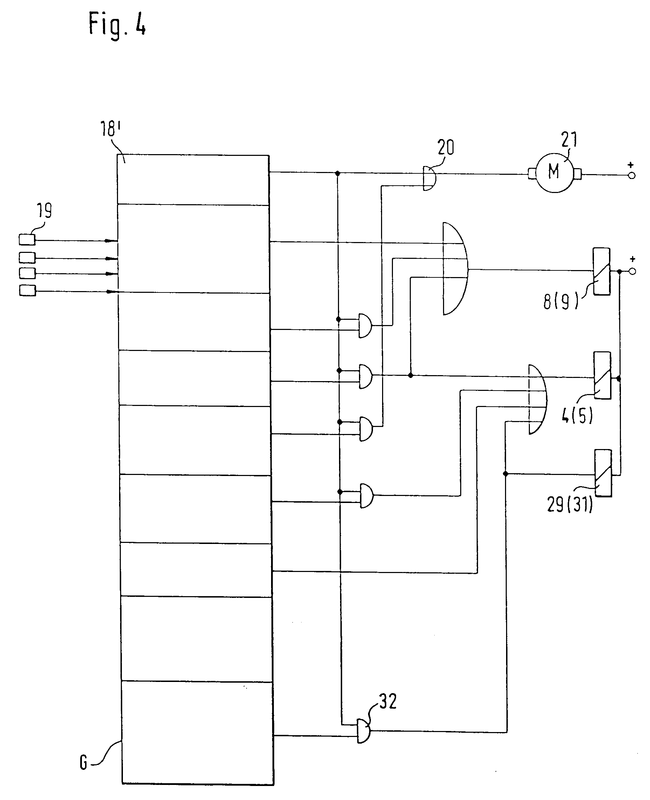

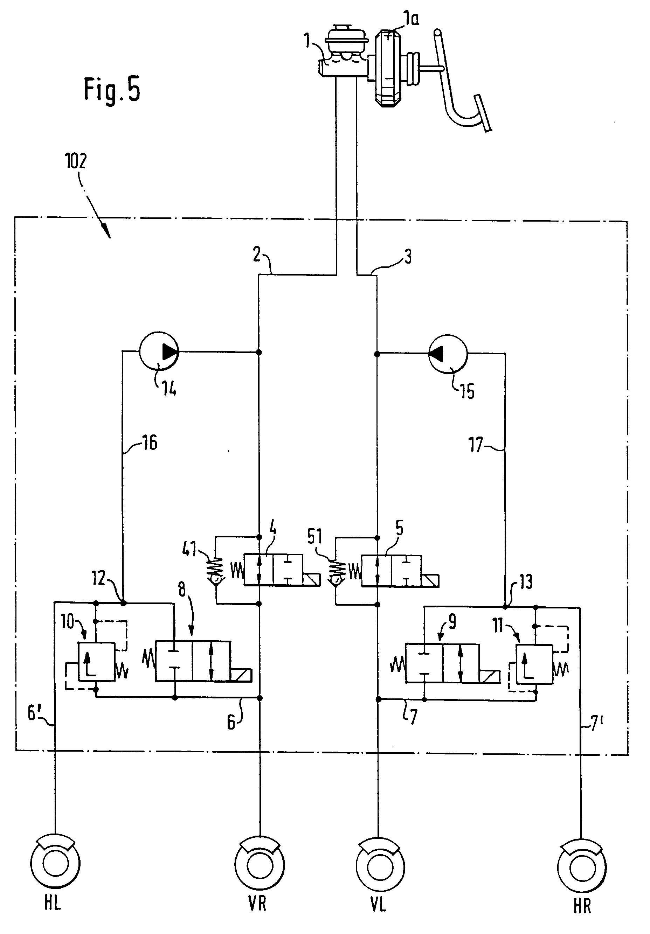

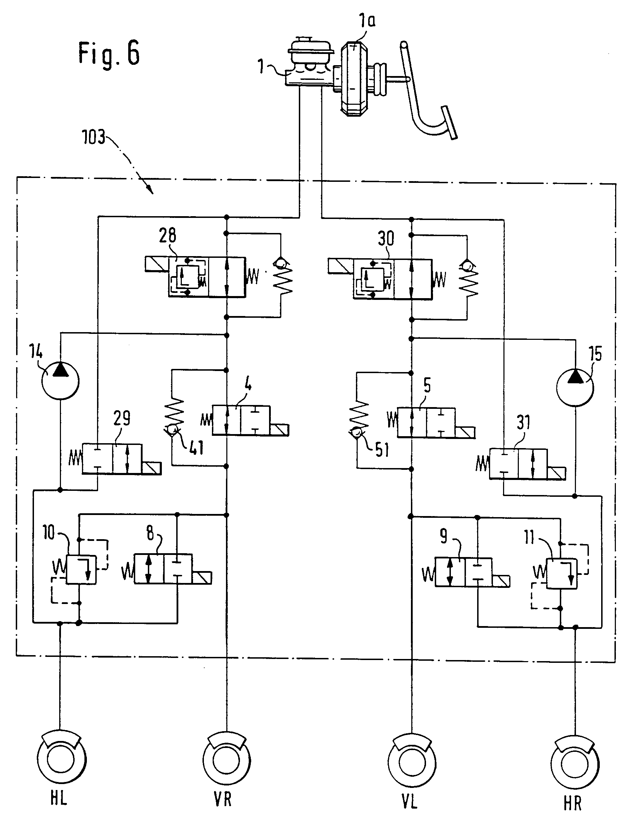

Vier Ausführungsbeispiele der Erfindung sind in der Zeichnung dargestellt und in der nachfolgenden Beschreibung näher erläutert. Es zeigen: Figur 1 eine erste Ausführung einer Bremsblockierschutzeinrichtung als Prinzip-Skizze, Figur 2 eine Weiterbildung der Bauart nach der Figur 1 im Hinblick auf eine Auslegung für zusätzliche Antriebsschlupfregelung, Figur 3 ein elektrisches Blockschaltbild für die Ausführung nach Figur 1, Figur 4 ein elektrisches Blockschaltbild für die Ausführung nach Figur 2, Figur 5 eine dritte Ausführung einer Bremsblockierschutzeinrichtung und Figur 6 eine vierte Ausführung einer Blockierschutzeinrichtung.

### Beschreibung der Ausführungsbeispiele

Eine für ein Fahrzeug mit Vorderrad-Antrieb bestimmte Fahrzeugbremsanlage mit Bremsblockierschutzeinrichtung 100 hat beispielsweise einen fußbetätigten Zweikreis-Hauptbremszylinder 1, der zwei Bremskreise 2 und 3 mit Druckmittel versorgt. Dem Hauptbremszylinder 1 ist ein Bremskraftverstärker 1a zugeordnet. Die beiden Bremskreise 2 und 3 sind diagonal aufgeteilt, so daß der Bremskreis 2 Bremsen des rechten Vorderrades VR und des linken Hinterrades HL versorgt, während dem Bremskreis 3 das linke Vorderrad VL und das rechte Hinterrad HR zugeordnet sind. In jedem Bremskreis 2 bzw. 3 befindet sich ein 2/2-Wege-Magnetventil 4 bzw. 5, das als stromlos offenes Ventil ausgebildet ist.

Die beiden Vorderräder VR und VL sind unmittelbar an diese beiden Magnetventile 4 und 5 angeschlossen.

Zu den beiden Hinterrädern HR und HL führen Leitungen 6, 6' und 7, 7', und zwischen jede dieser Leitungen 6, 6' bzw. 7, 7' ist ein 2/2-Wege-Magnetventil 8 bzw. 9 eingesetzt. Jedes dieser 2/2-Wege-Magnetventile 8 bzw. 9 ist so ausgebildet, daß es ein in Richtung auf die Hinterräder HL und HR erst bei einem Differenzdruck P von z.B. 30 bar sich öffnendes Rückschlagventil 10 bzw. 11 bildet. In bestromtem Zustand sind die 2/2-Wege-Magnetventile 8 bzw. 9 in beiden Richtungen durchströmbar.

In der von jedem 2/2-Wege-Magnetventil 8 bzw. 9 zu dem Hinterrad HL bzw. HR führenden Leitung 6' bzw. 7' liegt ein Abzweigpunkt 12 bzw. 13, von dem ausgehend je eine zu einer Rückförderpumpe 14 bzw. 15 führende Rückleitung 16 bzw. 17 angeordnet ist.

Anhand eines elektronischen Steuergeräts 18, das beispielsweise gemäß dem Blockschaltbild nach Figur 3 konzipiert sein kann, wird im Folgenden die Wirkungsweise der in Figur 1 dargestellten Bremsblockierschutzeinrichtung 100 beschrieben.

Das System nach Figur 1 und 2 ist für eine diagonale Bremskreis-Aufteilung ausgelegt. Außerdem gehören zu der Blockierschutzeinrichtung 100 ein elektronisches Steuergerät nach Figur 3 und in üblicher Weise bei den Fahrzeugrädern angebrachte Drehzahlfühler 19, die ihre Signale an das Steuergerät 18 abgegeben. Im Steuergerät 18 ist ein beispielsweise als elektronischer Baustein ausgebildetes ODER-GLied 20 zum Einschalten eines Motors 21 vorgesehen; der zum Antrieb der beiden Rückförderpumpen 14 und 15 bestimmt ist. Außerdem gehören zu der Schaltung zwei mal zwei ODER-Glieder, von denen in dem Blockschaltbild zwei beispielsweise als elektronische Bausteine ausgebildete ODER-Glieder 22 und 23 dargestellt sind, eines für jedes 2/2-Wege-Magnetventil 8 bzw. 4 oder 9 bzw. 5 vorgesehen, und es sind schließlich jeweils vier UND-Glieder 24, 25, 26, 27 zwischen das Steuergerät 18 und die ODER-Glieder 22 und 23 eingesetzt.

Beim gewöhnlichen Bremsen spricht die Blockierschutzeinrichtung 100 nicht an, die 2/2-Wege-Magnetventile 4, 5 stehen in ihrer gezeichneten Stellung, die HV 8, 9 werden z.B. während der Betätigung der Bremse angesteuert, so daß Bremsflüssigkeit vom Zweikreis-Hauptbremszylinder 1 ungehindert zu den Bremszylindern der Vorder- und Hinterräder VL, VR und HL, HR gelangen kann.

Bei Stromausfall (oder dem Ausfall von ABS) sorgen aber die in den 2/2-Wege-Magnetventilen 8 und 9 vorgesehenen vorgespannten Rückschlagventile 10 und 11 für eine Druckdifferenz P zwischen den Bremsen der Hinterräder HL und HR und den Bremsen der Vorderräder VR und VL. Beim Bremslösen werden die Vorderradbremsdrücke durch die Magnetventile 4, 5 sowie gegebenenfalls im Bypass durch Rückschlagventile 41, 42 und die Hinterradbremsdrücke durch die Rückförderpumpen 14, 15 mit den Ein- und Auslaßventilen hindurch abgesenkt.

Bei intakter Blockierschutzeinrichtung 100 erhält das 2/2-Wege-Magnetventil 8 bzw. 9 vom Steuergerät 18 Strom und geht in seine Durchgangsstellung, in welcher der Bremsflüssigkeitsdurchfluß zu dem Hinterrad HR bzw. HL unbehindert ist. Die Folge davon ist, daß die Hinterräder tendenziell vor den Vorderrädern Blockierneigung zeigen, weil die Druckdifferenz verschwindet, d.h. im "Normalbetrieb" findet keine Hinterradbremsdruckminderung statt. Dies bewirkt eine verbesserte Abbremsung auf hohen Reibwerten. Die bei der Druckabsenkarbeit der Blockierschutzeinrichtung ebenfalls angesteuerten und in ihre Schließstellung gehenden Magnetventile 4 und 5 sorgen mit den anlaufenden Rückförderpumpen 14 und 15 für die Möglichkeit eines notwendigen Druckabbaus.

Bei defekter Blockierschutzeinrichtung 100 bzw. defektem Steuergerät 18 werden die Magnetventile 8 und 9 nicht bestromt; sie wirken dann als Druckminderer, weil zum Überwinden der vorgespannten Rückschlagventile 10 bzw. 11 ein Drucküberschuß P von z.B. 30 bar gegenüber dem jeweils vorhandenen Hinterradbremsdruck notwendig ist.

Bei intakter Anlage muß auch der Raddruck abgebaut werden können. Dieser Abbau von Bremsdruck in den Bremsen der Hinterräder HL und HR erfolgt mittels der Rückförderpumpen 14 und 15.

Während dieses Vorganges kann man in den Bremsen der Vorderräder VL und VR weiterhin Drücke bis zur Blockierneigung (maximal um den Wert P über dem zugeodneten Hinerraddruck) ansteigen lassen.

Aus dem Blockschaltbild ist zu erkennen, daß die 2/2-Wege-Magnetventile 4, 5, 8, 9 auf folgende Weise angesteuert werden können:
1. Wenn die Blockierschutzeinrichtung 100 sowie das Steuergerät 18 funktionstüchtig sind, werden bei jeder Bremsung über das ODER-Glied 22 die Magnetventile 8 und 9 angesteuert und dadurch frei durchgängig.
2. Bei defekter Blockierschutzeinrichtung wird keines der Magnetventile angesteuert und die Magnetventile 8 und 9 wirken als Druckminderer. Im Blockschaltbild ist keine Bedingung erfüllt. Das Steuergerät 18 liefert keine Signale.
3. Blockierschutz-Funktion
   A. Zum gleichzeitigen Druckabbauen in den Bremsen aller Räder werden alle vier Magnetventile 4, 8 bzw. 5, 9 angesteuert, wodurch die Magnetventile 4 bzw. 5 schließen. Gleichzeitig werden die Pumpen 14 bzw. 15 durch Einschalten des Motors 21 angetrieben und bauen dadurch die Drücke ab.
   B. Zum Druckaufbau in den Radbremsen beider Räder eines Bremskreises mit sogenannter Diagonalaufteilung wird das Magnetventil 8 bzw. 9 angesteuert für freien Durchgang.
   C. Zum Druckaufbau in den Radbremsen der Vorderräder und gleichzeitigem Druckabbau in den Radbremsen der Hinterräder wird kein Magnetventil angesteuert; die anlaufenden Rückförderpumpen sorgen für Druckabbau in den Radbremsen der Hinterräder.
   D. Zum Druckhalten in den Radbremsen der Vorderräder und gleichzeitigen Druckabbau in den Radbremsen der Hinterräder werden lediglich die Magnetventile 4 und 5 angesteuert. Die Rückförderpumpen 14 und 15 laufen. Hierbei erfolgt für die Radbremsen der Vorderräder automatisch dann ein Übergang zum Druckabsenken, wenn zwischen den Radbremsen der Hinterräder und denen der Vorderräder ein Druckgefälle erreicht ist, bei dem sich das jeweilige Rückschlagventil 10 bzw. 11 öffnet.
   E. Zum gleichzeitigen Druckhalten in den Radbremsen von beiden Rädern HL und VR sowie VL und HR beider Bremskreise werden die Magnetventile 4 bzw. 5 angesteuert. Die Rückförderpunpen 14 bzw. 15 laufen nicht, weil der gemeinsame Motor 21 keinen Strom bekommt.
   F. Schließlich wird zum Druckhalten in der Radbremse des Hinterrades HL bzw. HR und gleichzeitigem Druckaufbau in der Radbremse des Vorderrades VR bzw. VL nur das Magnetventil 8 bzw. 9 geschlossen gelassen. Hierbei sind Druckunterschiede erreichbar bis zum Öffnen des Rückschlagventils 10 bzw. 11.

Es ist zu erkennen, daß damit alle möglichen Schaltvarianten abgedeckt sind.

Zur Realisierung dieser Schaltvarianten können auch andere Mittel als die genannten ODER-Gatter 20, 22, 23 und UND-Gatter 24, 25, 26, 27 eingesetzt werden.

Das Ausführungsbeispiel nach den Figuren 2 und 4 bezieht sich auf eine Bremsblockierschutzeinrichtung 101 gleicher Art wie die in den Figuren 1 und 3 dargestellte, nur daß hier die Bremsblockierschutzeinrichtung 101 noch zu einer Antriebsschlupf-Regeleinrichtung für antreibbare Vorderräder VR, VL weitergebildet ist. Gleiche Bauteile tragen deshalb die gleichen Bezugszahlen. Es ist zu erkennen, daß in der Figur 2 pro Bremskreis lediglich zwei zusätzliche Magnetventile 28 und 29 bzw. 30 und 31, nämlich je ein Druckhalteventil 28 bzw. 30 und ein Absperrventil 28 bzw. 31, notwendig sind, um eine Antriebsschlupf-Regelung zu verwirklichen.

Im Blockschaltbild nach der Figur 4 ist in einem Steuergerät 18' noch eine weitere Schaltstellung G vorgesehen, und es gibt ein weiteres UND-Glied 32 für das Magnetventil 29 bzw. 31 zur Verknüpfung des ASR mit der Bremsblockierschutzeinrichtung nach der Erfindung.

Anhand des Blockschaltbildes gemäß Figur 4 ist der Vorteil zu erkennen, daß die erfindungsgemäße Druckminderung für die Radbremsen von Hinterrädern mit einfachen Mitteln auch in einer Bremsanlage mit Antriebsschlupf-Regelung anwendbar ist.

In den Ausführungsbeispielen der Blockierschutzeinrichtungen 100, 101 gemäß den Figuren 1 und 2 sind die Rückschlagventile 10 bzw. 11 in die 2/2-Wege-Magnetventile 8 bzw. 9 integriert, so wie dies in der Figur 1 auch für die elektromagnetisch aktivierbaren Druckhalteventile 28, 30 symbolisch dargestellt ist. Ein solches Druckhalteventil 28 läßt sich beispielsweise der nach veröffentlichten GB 22 52 374 A entnehmen.

Anstelle von in 2/2-Wege-Magnetventile integrierten Rückschlagventilen kann man auch separate 2/2-Wege-Magnetventile 8, 9 und separate Rückschlagventile 10 bzw. 11 verwenden, so wie dies in den Figuren 5 und 6 dargestellt ist. Dort sind innerhalb der Bremsblockierschutzeinrichtungen 102 bzw. 103 je ein 2/2-Wege-Magnetventil 8 bzw. 9 mit je einem Rückschlagventil 10 bzw. 11 parallel verschaltet. Beim gesteuerten Öffnen der 2/2-Wege-Magnetventile 8, 9 ergeben sich Bypässe um die Rückschlagventile 10, 11 und somit die gleichen Funktionen wie in den Bremsblockierschutzeinrichtungen 100, 101. Beispielsweise kann man auf auf dem Markt für hydraulische Bauelemente erhältliche 2/2-Wege-Magnetventile und und Druckregeleinrichtungen zurückgreifen.

## Patentansprüche

1. Bremsblockierschutzeinrichtung (100-103), für die Radbremsen (VR, HL; VL, HR) eines Kraftfahrzeuges einer Einkreis- oder Mehrkreis-Bremsanlage für eine Veränderung des Bremsdruckes in den Radbremszylindern, bei der eine normalerweise auf Durchlaß geschaltete Wegeventilanordnung (4; 5) in die von einem Hauptbremszylinder (1) zu den Radbremszylindern führende gemeinsame Bremsleitung (2; 3) eines Bremskreises eingesetzt ist, die sich in zwei Bremskanäle für zugeordnete Bremszylinder der Radbremsen (VR, HL bzw. VL, HR) aufzweigt, wobei in den Bremskanälen zusätzlich im Normalbremsfall durchströmbare Druckregeleinrichtungen (10; 11) für Radbremszylinder und pro Bremskreis ein steuerbares Mittel (14; 15) zwecks Druckabbau in einem Radbremszylinder vorgesehen und mindestens einer der Bremskanäle eines Bremskreises direkt, d. h. ohne eine dieser Druckregeleinrichtungen (10; 11) mit einem der Radbremszylinder verbunden ist, der einen am höchsten an der Gesamtbremswirkung beteiligten Fahrzeugrad zugeordnet ist, wobei dieses Fahrzeugrad der Vorderachse des Fahrzeugs zugeordnet ist und wobei in einem zu einem Radbremszylinder eines Hinterrades (HL; HR) geführten Bremskanal (6; 7) die Druckregeleinrichtung (10; 11) angeordnet ist, wobei das Steuerbare Mittel als eine ein- und ausschaltbare Rückförderpumpe (14; 15) ausgebildet ist und deren Saugseite unmittelbar mit dem Radbremszylinder des Hinterrades (HL; HR) verbunden ist, dadurch gekennzeichnet, daß die in die gemeinsame Bremsleitung (2; 3) eingesetzte Wegeventilanordnung (4; 5) in Form eines 2/2-Wege-Magnetventils (4; 5) ausgebildet ist, daß eine Druckseite der Rückförderpumpe (14; 15) mit der gemeinsamen Bremsleitung (2; 3) zwischen dem Hauptbremsyzlinder (1) und der Wegeventilanordnung (4, 5), verbunden ist, und daß die Druckregeleinrichtung (10; 11) als mittels Druck gegen die Kraft einer Feder in Richtung zum Radbremszylinder des Hinterrades (HL; HR) offenbar gestaltete Druckregeleinrichtung ausgebildet und mit elektromagnetisch wirkenden Mitteln wie einem 2/2-Wege-Magnetventil (8; 9) derart kombiniert ist, daß bei einer durch Bestromung bewirkten Schaltstellung ein unbehinderter Durchlaß von Druck zur hinteren Radbremse (HL; HR) besteht.

2. Bremsblockierschutzeinrichtung nach Anspruch 1, dadurch gekennzeichnet, daß die Druckregeleinrichtung (10 bzw. 11) in die elektromagnetisch wirkenden Mittel (8 bzw. 9) integriert ist.

3. Bremsblockierschutzeinrichtung nach Anspruch 1, dadurch gekennzeichnet, daß die Druckregeleinrichtung (10 bzw. 11) und die elektromagnetisch wirkenden Mittel (8 bzw. 9) als eigenständige Ventile in der Bremsblockierschutzeinrichtung (102, 103) untergebracht und parallel miteinander verschaltet sind, wobei die elektromagnetisch wirkenden Mittel (8 bzw. 9) einen offenbaren Bypass um die Druckregeleinrichtung (10 bzw. 11) bilden.

4. Bremsblockierschutzeinrichtung nach einem der Ansprüche 1 oder 3, dadurch gekennzeichnet, daß die Feder der Druckregeleinrichtung (10 bzw. 11) auf einen Druck von etwa 30 bar vorgespannt ist.

5. Bremsblockierschutzeinrichtung nach Anspruch 2 oder 4, dadurch gekennzeichnet, daß die Kombination aus der Druckregeleinrichtung (10 bzw. 11) und den elektromagnetisch wirkenden Mitteln (8 bzw. 9) ähnlich einem entsperrbaren Rückschlagventil ausgebildet ist.

6. Bremsblockierschutzeinrichtung nach einem der Ansprüche 1 bis 5, dadurch gekennzeichnet, daß das in die gemeinsame Bremsleitung (2; 3) eingesetzte 2/2-Wege-Ventil (4 bzw. 5) zusätzlich mit einem in Druckaufbau-Richtung schließenden Rückschlagventil (41 bzw. 51) kombiniert ist.

7. Bremsblockierschutzeinrichtung nach einem der Ansprüche 1 bis 6, dadurch gekennzeichnet, daß die Blockierschutzeinrichtung (101, 103) durch entsprechende Komplettierung (28, 29 bzw. 30, 31) auch für Antriebsschlupf-Regelung anwendbar ist.

8. Verfahren zum Betreiben der Bremsblockierschutzeinrichtung nach einem der Ansprüche 1 bis 7, dadurch gekennzeichnet, daß unter der Voraussetzung, daß die Blockierschutzeinrichtung (100; 101; 102; 103) und das Steuergerät (18; 18') funktionstüchtig sind, bei jeder Bremsung die den Hinterradbremsen (HL; HR) zugeordneten elektromagnetisch wirkenden Mittel (8; 9) angesteuert werden zur freien Durchgängigkeit von Druck zu den Hinterradbremsen (HL; HR).

9. Verfahren zum Betreiben der Bremsblockierschutzeinrichtung nach einem der Ansprüche 1 bis 7, dadurch gekennzeichnet, daß im Blockierschutzbetrieb zum gleichzeitigen Druckabbauen in den Radbremsen aller Räder (VR, HL; VL, HR) die Wegeventilanordnung (4, 5) und die elektromagnetisch wirkenden Mittel (8, 9) angesteuert und die Rückförderpumpe (14; 15) angetrieben werden.

10. Verfahren zum Betreiben der Bremsblockierschutzeinrichtung nach einem der Ansprüche 1 bis 7, dadurch gekennzeichnet, daß im Blockierschutzbetrieb zum Druckaufbau in den Radbremsen des Vorderrades (VR; VL) und des Hinterrades (HL; HR) eines Bremskreises (2; 3) die elektromagnetisch wirkenden Mittel (8; 9) angesteuert werden für freien Durchgang.

11. Verfahren zum Betreiben der Bremsblockierschutzeinrichtung nach einem der Ansprüche 1 bis 7, dadurch gekennzeichnet, daß im Blockierschutzbetrieb zum gleichzeitigen Druckaufbau in den Radbremsen der Vorderräder (VR; VL) und dabei gleichzeitigem Druckabbau in den Radbremsen der Hinterräder (HL; HR) die Rückförderpumpen (14; 15) angetrieben werden.

12. Verfahren zum Betreiben der Bremsblockierschutzeinrichtung nach einem der Ansprüche 1 bis 7, dadurch gekennzeichnet, daß im Blockierschutzbetrieb zum Druckhalten in den Radbremsen der Vorderräder (VR; VL) und dabei gleichzeitigem Druckabbau in den Radbremsen der Hinterräder (HL; HR) die Wegeventilanordnungen (4; 5) angesteuert und die Rückförderpumpen (14; 15) angetrieben werden.

13. Verfahren zum Betreiben der Bremsblockierschutzeinrichtung nach einem der Ansprüche 1 bis 7, dadurch gekennzeichnet, daß im Blockierschutzbetrieb zum gleichzeitigen Druckhalten in den Radbremsen des Vorderrades (VR) und des Hinterrades (HL) des einen Bremskreises und des Vorderrades (VL) und des Hinterrades (HR) des anderen Bremskreises die Wegeventilanordnungen (4; 5) angesteuert werden.

## Claims

1. Anti-lock brake device (100-103) for the wheel brakes (VR, HL; VL, HR) of a motor vehicle of a single-circuit or multi-circuit braking system for varying the brake pressure in the wheel brake cylinders, in which a directional control valve arrangement (4; 5) which is normally switched to through-flow is inserted into the common brake line (2; 3) of a brake circuit, which brake line (2; 3) leads from a main brake cylinder (1) to the wheel brake cylinders and branches into two brake channels for associated brake cylinders of the wheel brakes (VR, HL and VL, HR), pressure control devices (10; 11), which can be additionally flowed through in the brake channels in the case of normal braking, for wheel brake cylinders being provided and one controllable means (14; 15) being provided per brake circuit for the purpose of reducing pressure in a wheel brake cylinder, and at least one of the brake channels of a brake circuit being connected directly, i.e. without one of these pressure control devices (10; 11), to one of the wheel brake cylinders which is assigned a [sic] vehicle wheel which is most involved in the entire braking effect, this vehicle wheel being assigned to the front axle of the vehicle and the pressure control device (10; 11) being arranged in a brake channel (6; 7) leading to a wheel brake cylinder of a rear wheel (HL; HR), the controllable means being constructed as a return pump (14; 15) which can be switched on and off and the intake side of the said return pump (14; 15) being connected directly to the wheel brake cylinder of the rear wheel (HL; HR), characterized in that the directional control valve arrangement (4; 5) which is inserted into the common brake line (2; 3) is constructed in the form of a 2/2 way solenoid valve (4; 5), in that an outlet side of the return pump (14; 15) is connected to the common brake line (2; 3) between the main brake cylinder (1) and the directional control valve arrangement (4; 5), and in that the pressure control device (10; 11) is constructed as a pressure control device which is designed so as to be capable of opening counter to the force of a spring, in the direction towards the wheel brake cylinder of the rear wheel (HL; HR), by means of pressure and is combined with electromagnetically acting means, such as a 2/2 way solenoid valve (8; 9) in such a way that in a switched position brought about by energization, there is an unimpeded through-flow of pressure to the rear-wheel brake (HL; HR).

2. Anti-lock brake device according to Claim 1, characterized in that the pressure control device (10 or 11) is integrated into the electromagnetically acting means (8 or 9).

3. Anti-lock brake device according to Claim 1, characterized in that the pressure control device (10 or 11) and the electromagnetically acting means (8 or 9) are accommodated as independent valves in the anti-lock brake device (102, 103) and are connected parallel to one another, the electromagnetically acting means (8 or 9) forming an openable bypass around the pressure control device (10 or 11).

4. Anti-lock brake device according to one of Claims 1 or 3, characterized in that the spring of the pressure control device (10 or 11) is preloaded to a tension of approximately 30 bar.

5. Anti-lock brake device according to Claim 2 or 4, characterized in that the combination of the pressure control device (10 or 11) and the electromagnetically acting means (8 or 9) is of similar construction to a pilot-operated non-return valve.

6. Anti-lock brake device according to one of Claims 1 to 5, characterized in that the 2/2 way valve (4 or 5) which is inserted into the common brake line (2; 3) is additionally combined with a non-return valve (41 or 51) which closes in the pressure increase direction.

7. Anti-lock brake device according to one of Claims 1 to 6, characterized in that the anti-lock device (101, 103) can also be used for anti-slip control by means of appropriate completing elements (28, 29 and 30, 31).

8. Method for operating the anti-lock brake device according to one of Claims 1 to 7 characterized in that, provided that the anti-lock device (100; 101; 102; 103) and the control device (18; 18') are operative, whenever braking occurs the electromagnetically acting means (8; 9) assigned to the rear-wheel brakes (HL; HR) are driven to allow a free flow of pressure to the rear-wheel brakes (HL; HR).

9. Method for operating the anti-lock brake device according to one of Claims 1 to 7, characterized in that, in anti-lock mode, in order to simultaneously reduce pressure in the wheel brakes of all the wheels (VR, HL; VL, HR), the directional control valve arrangement (4, 5) and the electromagnetically acting means (8, 9) are driven and the return pump (14; 15) is operated.

10. Method for operating the anti-lock brake device according to one of Claims 1 to 7, characterized in that, in anti-lock mode, in order to increase pressure in the wheel brakes of the front wheel (VR; VL) and of the rear wheel (HL; HR) of a brake circuit (2; 3), the electromagnetically acting means (8; 9) are driven to allow free flow.

11. Method for operating the anti-lock brake device according to one of Claims 1 to 7, characterized in that, in anti-lock mode, in order to simultaneously increase pressure in the wheel brakes of the front wheels (VR; VL) and, during this process, simultaneously reduce pressure in the wheel brakes of the rear wheels (HL; HR), the return pumps (14; 15) are operated.

12. Method for operating the anti-lock brake device according to one of Claims 1 to 7, characterized in that, in anti-lock mode, in order to maintain pressure in the wheel brakes of the front wheels (VR; VL) and during this process simultaneously reduce pressure in the wheel brakes of the rear wheels (HL; HR), the directional control valve arrangements (4; 5) are driven and the return pumps (14; 15) are operated.

13. Method for operating the anti-lock brake device according to one of Claims 1 to 7, characterized in that, in anti-lock mode, in order to simultaneously maintain pressure in the wheel brakes of the front wheel (VR) and of the rear wheel (HL) of the one brake circuit, and of the front wheel (VL) and of the rear wheel (HR) of the other brake circuit, the directional control valve arrangements (4; 5) are driven.

## Revendications

1. Système antiblocage (100, 103) pour les freins de roues (VR ; HL ; VL ; HR) d'un véhicule automobile équipé d'une installation de frein à un ou plusieurs circuits pour modifier la pression de frein dans les cylindres de frein de roues, utilisant un dispositif à distributeur (4, 5) branché normalement sur la position passante dans la conduite de frein (2, 3) commune d'un circuit de frein reliant le maître cylindre (1) au cylindre des freins de roues, cette conduite de frein se subdivisant en deux canaux de frein pour les cylindres de frein associés des freins de roues (VR, HL ou VL, HR), et les canaux de frein comportant en outre des installations de régulation de pression (10, 11) pour les cylindres de frein de roues, ces installations étant passantes pour le freinage normal, et chaque circuit de frein comporte un moyen commandé (14, 15) pour diminuer la pression dans un cylindre de frein de roues et au moins l'un des canaux de frein d'un circuit de frein est relié directement, c'est-à-dire sans l'une de ces installations de régulation de pression (10, 11), à un cylindre de frein de roues associé à la roue du véhicule participant le plus à l'effet de freinage global, cette roue de véhicule étant associée à l'essieu avant du véhicule et dans un canal de frein (6, 7) conduisant à un cylindre de frein d'une roue arrière (HL, HR) se trouve l'installation de régulation de pression (10, 11), le moyen commandé étant réalisé sous la forme d'une pompe de refoulement (14, 15) susceptible d'être mise en marche et d'être coupée, son entrée étant directement reliée au cylindre de frein de la roue arrière (HL ; HR), caractérisé en ce que le dispositif à distributeur à tiroir (4, 5) monté dans la conduite de frein commune (2, 3) est réalisé sous la forme d'une électrovanne à 2/2 voies (4, 5), le côté sortie de la pompe de refoulement (14, 15) étant relié à conduite de frein commune (2, 3) entre le maître cylindre (1) et le dispositif à distributeur à tiroir (4, 5), et l'installation de régulation de pression (10, 11) est réalisée sous la forme d'une installation de régulation de pression qui s'ouvre par la pression contre la force d'un ressort vers le cylindre de frein de la roue arrière (HL ; HR), et est combinée à des moyens électromagnétiques tels qu'une électrovanne à 2/2 voies (8 ; 9) de façon que, pour une position assurée par une alimentation électrique, la pression puisse passer sans obstacle vers le frein de roues arrière (HL ; HR).

2. Système antiblocage selon la revendication 1, caractérisé en ce que l'installation de régulation de pression (10, 11) est intégrée dans les moyens électromagnétiques (8, 9).

3. Système antiblocage selon la revendication 1, caractérisé en ce que l'installation de régulation de pression (10, 11) et les moyens électromagnétiques (8, 9) sont logés comme des vannes indépendantes dans le système antiblocage (102, 103) et sont branchés en parallèle l'un sur l'autre, les moyens électromagnétiques (8, 9) formant une dérivation qui peut être ouverte autour de l'installation de régulation de pression (10, 11).

4. Système antiblocage selon l'une des revendications 1 ou 3, caractérisé en ce que le ressort de l'installation de régulation de pression (10, 11) est précontraint à une pression d'environ 30 bars.

5. Système antiblocage selon la revendication 2 ou 4, caractérisé en ce que la combinaison de l'installation de régulation de pression (10, 11) et des moyens électromagnétiques (8, 9) est réalisée comme un clapet anti-retour déverrouillable.

6. Système antiblocage selon l'une des revendications 1 à 5, caractérisé en ce que l'électrovanne à 2/2 voies (4, 5) montée dans la conduite de frein commune (2, 3) est en outre combinée à un clapet anti-retour (41, 51) se fermant dans la direction de l'établissement de la pression.

7. Système antiblocage selon l'une des revendications 1 à 6, caractérisé en ce que le système antiblocage (101, 103) est applicable à un système antipatinage par un complément approprié (28, 29 ; 30, 31).

8. Procédé de mise en oeuvre du système antiblocage selon l'une des revendications 1 à 7, caractérisé en ce qu'à la condition que le système antiblocage (100, 101, 102, 103) et le dispositif de commande (18, 18') soient aptes à fonctionner, à chaque freinage les moyens électromagnétiques (8, 9) associés aux freins de roues arrière (HL, HR) sont commandés pour assurer le libre passage de la pression vers les freins de roues arrière (HL, HR).

9. Procédé de mise en oeuvre du système antiblocage selon l'une des revendications 1 à 7, caractérisé en ce qu'en mode antiblocage, pour diminuer en même temps la pression dans les freins de toutes les roues (VR, HL ; VL, HR), le dispositif à distributeur à tiroir (4, 5) et les moyens électromagnétiques (8, 9) sont commandés et la pompe de refoulement (14, 15) est mise en oeuvre.

10. Procédé de mise en oeuvre du système antiblocage selon l'une des revendications 1 à 7, caractérisé en ce qu'en mode antiblocage, pour établir la pression dans les freins de la roue avant (VR ; VL) et de la roue arrière (HL ; HR) d'un circuit de frein (2, 3), on commande les moyens électromagnétiques (8, 9) pour assurer le libre passage.

11. Procédé de mise en oeuvre du système antiblocage selon l'une des revendications 1 à 7, caractérisé en ce qu'en mode antiblocage, pour établir la pression dans les freins des roues avant (VR, VL) et diminuer en même temps la pression dans les freins des roues arrière (HL, HR), on entraîne les pompes de refoulement (14, 15).

12. Procédé de mise en oeuvre du système antiblocage selon l'une des revendications 1 à 7, caractérisé en ce qu'en mode antiblocage, pour retenir la pression dans les freins des roues avant (VR, VL) et en même temps diminuer la pression dans les freins des roues arrière (HL, HR), on commande les dispositifs à distributeur à tiroir (4, 5) et on met en oeuvre les pompes de refoulement (14, 15).

13. Procédé de mise en oeuvre du système antiblocage selon l'une des revendications 1 à 7, caractérisé en ce qu'en mode antiblocage, pour retenir en même temps la pression dans les freins de la roue avant (VR) et de la roue arrière (HL) d'un circuit de frein, et de la roue avant (VL) et de la roue arrière (HR) de l'autre circuit de frein, on commande les dispositifs à distributeur à tiroir (4, 5).
